(19) **Europäisches Patentamt**
**European Patent Office**
**Office européen des brevets**

(11) **EP 3 940 613 A1**

(12) **EUROPÄISCHE PATENTANMELDUNG**

(43) Veröffentlichungstag:
**19.01.2022 Patentblatt 2022/03**

(21) Anmeldenummer: **21185722.2**

(22) Anmeldetag: **15.07.2021**

(51) Internationale Patentklassifikation (IPC):
***G06Q 20/06*** *(2012.01)* ***G06Q 40/06*** *(2012.01)*

(52) Gemeinsame Patentklassifikation (CPC):
**G06Q 40/06; G06Q 20/065**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **17.07.2020 DE 102020119016**

(71) Anmelder: **BO1 AG**
**65760 Eschborn (DE)**

(72) Erfinder: **Güntner, Sascha Alexander**
**61476 Kronberg (DE)**

(74) Vertreter: **Tergau & Walkenhorst**
**Patentanwälte PartGmbB**
**Lurgiallee 12**
**60439 Frankfurt am Main (DE)**

(54) **DIGITALE HANDELSPLATTFORM ZUR TOKENISIERUNG VON UNTERNEHMENSANTEILEN**

(57) Es soll auf der Basis und unter Rückgriff auf die Blockchain-Technologie eine digitale Handelsplattform angegeben, mit der auf besonders manipulations- und fälschungssichere Weise in einer digitalen Umgebung die Ausgabe von Unternehmensanteilen, Unternehmensschuldverschreibungen und dergleichen an private oder professionelle Investoren ermöglicht wird. Die digitale Handelsplattform umfasst dazu erfindungsgemäß mit ein Token Store Modul, in dem für die Ausgabe und Veräußerung von Unternehmensanteilen, Unternehmensschuldverschreibungen oder dergleichen für das anbietende Unternehmen jeweils ein eigenständiger Smart Contract erstellt wird, über den die zur Veräußerung vorgesehenen Unternehmensanteile, Unternehmensschuldverschreibungen oder dergleichen tokenisiert werden.

FIG. 3

BO1 Token-Speicher

Übertragung von tokenisierten Unternehmensanteilen in den Token-Speicher

BO1

1.) Smart Contract Tokenisierte Unternehmensanteile übertragen

2.)

BO1 Token-Speicher

Funktionen:
- Preis festlegen (Token, Währung, Wert)
- Token kaufen (Token, Betrag)
- Token ERC 20 kaufen (Token, Betrag, Währung)

Benutzer-Wallet

Smart Contract, z. B. USD-Tether

Zuteilung Übertragung

EP 3 940 613 A1

**Beschreibung**

Die Erfindung bezieht sich auf eine digitale Handelsplattform zur Tokenisierung von Unternehmensanteilen, Unternehmensschuldverschreibungen und dergleichen. Sie bezieht sich weiter auf ein Verfahren zum Betreiben einer solchen Plattform.

Die Technologie von Blockketten (engl. Blockchains bzw. Block Chains) bzw. "Distributed Ledgers" ist aktuell eine intensiv diskutierte Technologie, mit der auf einfache, dezentrale Weise z. B. finanzielle Transaktionen durchgeführt, aber auch Verträge abgeschlossen oder Eigentumsverhältnisse zugeordnet werden können. Unter einer Blockchain wird dabei im allgemeinen eine dezentral organisierte Datenbank verstanden, deren Integrität (Sicherung gegen nachträgliche Manipulation) durch Speicherung des Einwegfunktionswertes, auch Hashwert genannt, des vorangehenden Datensatzes im jeweils nachfolgenden, also durch kryptographische Verkettung, gesichert ist. Das Verfahren ist die technische Basis für sogenannte Kryptowährungen (z.B. Bitcoin), kann aber ggf. darüber hinaus in verteilten Systemen zur Verbesserung/ Vereinfachung der Transaktionssicherheit im Vergleich zu herkömmlichen zentralen (Datenbank-)Systemen beitragen. Neben Anwendungen für dezentrale Bezahlsysteme (z.B.Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen.

Ein durch eine Blockchain geschützter Transaktionsdatensatz umfasst im allgemeinen Programmcode. Unter dem Begriff "Smart Contract" wird in diesem Zusammenhang ein Programmcode verstanden, in dem zum Erstellungszeitpunkt Bedingungen definiert und zu seiner Laufzeit ausgewertet werden können, so dass bestimmte Transaktionen in einer bestimmten (Geldbetrags-)Höhe an einen bestimmten oder mehrere bestimmte Empfänger durchgeführt werden können oder nicht.

Mit Hilfe des Transaktionsdatensatzes kann die Transaktion ausgeführt werden. Unter einer Transaktion wird eine gegenseitige Übertragung von virtuellen oder realen Gütern bzw. einer Zahlung oder anderen Informationen von einem Sender zu einem Empfänger verstanden. Sender und Empfänger sind in der Regel Geschäftspartner bzw. Firmen bzw. deren EDV-technische Rechner bei sogenanntem Buchgeld, dessen eine Ausführungsform beispielsweise Bitcoin sein kann. Unter Umständen kann ein Vermittler eine solche Transaktion ausführen und/oder überwachen.

Der vorliegenden Erfindung liegt die Aufgabe zu Grunde, auf der Basis und unter Rückgriff auf die genannten Blockchain-Technologie eine digitale Handelsplattform anzugeben, mit der auf besonders manipulations- und fälschungssichere Weise in einer digitalen Umgebung die Ausgabe von Unternehmensanteilen, Unternehmensschuldverschreibungen und dergleichen an private oder professionelle Investoren ermöglicht wird. Des Weiteren soll ein Verfahren zum Betreiben einer solchen digitalen Handelsplattform angegeben werden.

Zur Lösung dieser Aufgabe sind erfindungsgemäß ein System und ein Verfahren vorgesehen, wie sie sich aus der nachfolgenden Beschreibung ergeben. Dabei sind eine Vielzahl von als eigenständig erfinderisch angesehenen Konzepten vorgesehen und miteinander kombiniert.

Das erfindungsgemäße System und korrespondierend dazu das erfindungsgemäße Verfahren umfassen als eine erste als eigenständig erfinderisch angesehene Komponente den Ansatz, dass für die Ausgabe und Veräußerung von Unternehmensanteilen, Unternehmensschuldverschreibungen oder dergleichen für das anbietende Unternehmen jeweils ein eigenständiger Smart Contract erstellt wird, über den die zur Veräußerung vorgesehenen Unternehmensanteile, Unternehmensschuldverschreibungen oder dergleichen tokenisiert werden.

Unter "Tokenisierung" ist zunächst die Aufteilung eines Assets, wie beispielsweise einer Unternehmensbeteiligung, in mehrere Teile zu verstehen. Ein Token ist eine Kryptowährung, die auf einer bereits bestehenden Blockchain aufgebaut ist und im Regelfall ein digitales Asset darstellt. An sich gibt es drei verschiedene Arten von Kryptowährungen, nämlich zunächst den "klassischen" Transactional Coin, der wie eine virtuelle Währung als Bezahlmittel genutzt werden kann. Zusätzlich gibt es sogenannte Utility Coins, die eine Art virtuellen Gutschein darstellen, den man zu einem späteren Zeitpunkt gegen Produkte oder Dienstleistungen eintauschen kann. Dies kommt zum Beispiel bei der Vorbestellung eines noch nicht verfügbaren Produkts zum Einsatz. (Security) Tokens repräsentieren im Gegenzug ein Investment und sind damit vergleichbar mit einer Aktie oder einer Sicherheit.

Besonders bevorzugt erfolgt, im erfindungsgemäßen System insbesondere in einem entsprechend ausgelegten Modul, die Tokensierung und/oder die Erstellung des unternehmensspezifischen Smart Contract, auf Basis der Plattform Ethereum. Ethereum ist eine öffentliche, dezentrale Blockchain. Im Gegensatz zu anderen, so genannten "Distributed Ledger Technology" (DLT)-Lösungen bietet Ethereum eine auf eine Mehrzahl von Servern verteilte Computing-Plattform, auf der Smart Contracts abgebildet werden können, mit denen sich komplexe logische Operationen ausdrücken lassen. Das Mining und somit der Betrieb von Ethereum wird durch die Ausschüttung von Ether-Token incentiviert. Ethereum kann wiederum gegen "Gas" eingetauscht werden, was zum Ausführen von Smart Contracts benötigt wird.

Bei Ethereums virtueller Maschine kostet jeder Befehl, den die virtuelle Maschine ausführt, Einheiten, "Gas" genannt. Wenn man eine Transaktion ausführt muss man immer den Wert Gaslimit bestimmen. Dieser gibt den maximalen Gasverbrauch an, den der Smart Contract verbrauchen darf.

Diese seit 2015 öffentlich zugängliche Plattform erlaubt es nicht nur, besonders komplizierte Smart Contracts abzubilden, sondern verfügt auch über eine besonders große Entwickler-Community und neben Bitcoin über die weiteste Verbreitung aller Crypto-Plattformen. Aufgrund dieser Eigenschaften, insbesondere der großen Verbreitung, wird diese Plattform vorliegend somit als besonders geeignet angesehen.

Bei der Tokenisierung der Unternehmensanteile und dergleichen werden diese erfindungsgemäß auf der Ethereum-Blockchain als je ein Smart Contract pro tokenisiertem Unternehmen repräsentiert. Smart contracts, wie oben beschrieben, stellen dabei Programmcodes dar, die durch Token (oder auch Coins) initiiert werden können und dabei Transaktionen auslösen. Die Wechselwirkung zwischen Token und Smart Contract wird dabei anhand entsprechender Standards beschrieben, wobei insbesondere für die Ethereum Blockchain insbesondere die Standards ERC20 und ERC721 bedeutsam sind. Token gemäß Standard ERC20 sind dabei miteinander identisch und somit austauschbar, so dass sie sich besonders für eine Nutzung in der Art einer Geldeinheit oder Währung eignen. Demgegenüber sind Token gemäß Standard ERC721 individualisiert und einzigartig, so dass sie nicht gegeneinander austauschbar sind. Der erfindungsgemäß vorgesehene Smart Contract implementiert dabei besonders bevorzugt den ERC721 Standard. Für fortgeschrittene Nutzer und institutionelle Anleger können die Unternehmensanteile so in den üblichen Ethereum Wallets und Custody-Lösungen mit ERC721-Support komfortabel verwaltet werden. Jedes emittierende Unternehmen kann einen Namen festlegen, mit dem der Token dargestellt werden kann. Der ERC721-Standard stellt im Gegensatz zum häufig verwendeten ERC20-Standard sicher, dass jeder Token eindeutig ist und nicht geteilt werden kann. Das hat für die Nutzung im Rahmen von Anteilen den Vorteil, dass der Mindestbezug zu einem Anteil nicht verloren geht und für jeden einzelnen Token die komplette Historie auf der Blockchain dokumentiert bleibt. Konzeptionell ist das Vorgehen vergleichbar mit einer Aktie, die über eine eindeutige Ausgabenummer identifiziert werden kann.

In einer als eigenständig erfinderisch angesehenen Ausführungsform wird die Eigentümerstruktur innerhalb des Smart Contracts gespeichert. Für jedes Wallet, das über Token verfügt, liegt ein Eintrag vor, in dem die Token-Balance dieses Wallets gespeichert wird. Die Übertragung von Token geschieht durch den Aufruf einer Funktion auf dem Smart Contract, der die Veränderungen der Wallet-Bilanzen vornimmt.

In einer weiteren als eigenständig erfinderisch angesehenen Ausführungsform werden über die digitale Handelsplattform wandelbare Unternehmensanleihen gehandelt. Die dabei tokenisierten Anteile werden mit einer Laufzeit versehen. Nach Ablauf dieser Laufzeit erfolgt der Wandel der Token in Unternehmensanteile (Equity). Das Ende der Laufzeit wird zum Start im Smart Contract hinterlegt. Zum Ende der Laufzeit können Token nicht mehr gehandelt werden, sondern lediglich in Anteile umgewandelt werden.

In einer vorteilhaften, ebenfalls als eigenständig erfinderisch angesehenen Ausführungsform ist die Auszahlung von Zinsen und Gewinnbeteiligungen des emittierenden Unternehmens vorgesehen. Dieses muss, entsprechend den mit den Investoren abgestimmten Konditionen, Auszahlung an die Inhaber der Token leisten. Das von innerhalb der erfindungsgemäßen Handelsplattorm vorgesehene Smart Contract Template erlaubt es, diese Auszahlungen entweder in ETH (= Ethereum) oder durch eine andere ERC20 kompatible Cryptowährung (z. B. einen US Dollar oder Euro Stable Coin) vorzunehmen. Bei Auszahlungen in ETH überträgt das tokenisierte Unternehmen ETH in Höhe der zu leistenden Zahlung an die Adresse des Smart Contracts. Danach wird durch den Aufruf einer Funktion auf diesem, die vorhandene ETH Bilanz entsprechend der gehaltenen Token pro rata an alle Tokeninhaber ausgeschüttet.

Auszahlungen in ERC20 kompatiblen Währungen erfolgen ähnlich. Allerdings überträgt das tokenisierte Unternehmen zunächst die ERC20 Token auf die Adresse des Smart Contracts und ruft danach auf dem Smart Contract eine Funktion auf, bei der zusätzlich die Adresse des Smart Contracts zur Verwaltung des genutzten ERC20 Tokens angegeben werden muss.

In einer besonders bevorzugten und ebenfalls als eigenständig erfinderisch angesehenen Ausführungsform umfasst die digitale Handelsplattform ein Token Management Modul, das zur Vereinfachung der Handhabung der Ausschüttung dient. Der von diesem Modul vorgenommene "managed Token Service" ermöglicht es dem emitierenden Unternehmen, lediglich den Eurobetrag für eine Ausschüttung an die digitale Handelsplattform zu überweisen. Anschließend werden alle beschriebenen Funktionen zur Ausschüttung einschließlich der pro rata Aufteilung auf alle dem jeweiligen Unternehmen zugeordneten Token über das "managed Wallet" des jeweiligen Unternehmens von digitalen Handelsplattform gesteuert.

In weiterer besonders vorteilhafter und als eigenständig erfinderisch angesehener Ausgestaltung umfasst die digitale Handelsplattform ein ebenfalls als Smart Contract ausgestaltetes "Token Store Modul". In diesem Token Store können berechtigte Nutzer tokenisierte Assets erwerben.

Nach der Tokenisierung eines Unternehmens werden die tokensierten Anteile an dem Unternehmen dabei in den Token Store übertragen. In einem zweiten Schritt werden den für alle zugelassenen Währungen (z. B. ETH, USDT) die Preise für pro Token gesetzt. Der Kauf von Token geschieht sodann, indem der Käufer den Kaufpreis in ETH sowie den Namen des gewünschten Token an die "Kaufen" Funktion des Token Stores schickt. Der Token Store überträgt daraufhin die vom Käufer erworbenen Token an dessen Wallet. Beim Kauf wird überprüft, dass das Wallet des Käufers zum Kauf berechtigt ist. Für Token, die nicht beliebig geteilt werden können, kann ein Restbetrag an ETH verbleiben, dieser wird dem handelnden Nutzer ebenfalls zurücküberwiesen.

Alternativ kann der Kauf von Token auch mit ERC20 Token (z.B. EUR oder USD Stable Coins) implementiert werden. In diesem Fall gibt der kaufende Nutzer, der über den ERC20 Token verfügt, auf dessen Smart Contract eine Funktion auf, um dem Token Store die Verfügung über die notwendige Anzahl Tokens zu gewähren. In einer zweiten Transaktion ruft der Inhaber die "Kaufen mit ERC20 Token" Funktion auf dem Token Store Smart Contract auf. Hierbei wird die ERC20 Währung, das zu kaufende Asset und die Menge, die gekauft werden soll übergeben. Ist die Währung im Security Store als legitimes Zahlungsmittel hinterlegt, wird versucht den mit den zu kaufenden Assets korrespondierenden Betrag an den Store zu übertragen. Gelingt diese Transaktion, erhält der User die Asset Token ins dessen Wallet.

In ganz besonders bevorzugter und ebenfalls als eigenständig erfinderisch angesehener Ausgestaltung umfasst die digitale Handelsplattform ein vom Nutzer unmittelbar aktivierbares Auto-Invest-Modul. Ein Nutzer, der dieses Auto-Invest-Modul für sich aktiviert hat, investiert regelmäßig in einem wählbaren Zeitintervall, beispielsweise jeden Monat, einen fixen Betrag aus seiner Wallet, von dem ein Teil in tokenisierte Assets investiert wird. Nach dem Eingang des monatlichen Sparbeitrags des Nutzers auf der digitalen Plattform wird der für den Kauf von tokenisierten Assets genutzte Betrag in ETH umgetauscht. Ein in das Auto-Invest-Modul integrierter Robo-Advisor entscheidet anhand der vom Nutzer individuell vorgegebenen Sparziele, seines Risikoprofils und der Präferenzen des Kunden, in welche Assets bzw. Token mit welchen Verhältnissen investiert werden soll. Für jedes Asset wird der entsprechende ETH Betrag automatisch an die "Kaufen" Funktion des Token Stores überwiesen. Dem managed Wallet des Nutzers werden daraufhin sofort die erworbenen Assets gutgeschrieben.

Sparkunden, die mit ihren monatlichen Sparbeträgen in tokenisierte Assets investieren, erwerben somit die Unternehmensanteile direkt auf der Blockchain vom Auto-Invest-Modul im Token Store. Die tokenisierten Anteile, die Sparern zur Verfügung stehen, werden von der digitalen Handelsplattform direkt nach Tokenisierung an diesen Smart Contract übertragen.

Die zum Kauf von Token berechtigten Wallets werden von der digitalen Handelsplattform in einem Freigabemodul, bevorzugt im Token Store, als Whitelist gemanaged. Alle aktiven Nutzer, die den KYC / AML Prozess bei der Registrierung durchlaufen haben und über ein managed Wallet verfügen, sind zum Kauf von Token im Token Store berechtigt.

Bevorzugt wird der Verkaufspreis im Token Store für alle angebotenen Token monatlich neu festgelegt. Für jedes angebotene Asset werden dabei die Preise für die akzeptierten Währungen hinterlegt. Ziel ist es, dass zum Start der Plattform die populären ERC20 Stable-Coins zum Verkauf von Assets genutzt werden können und die Verkaufserlöse nicht von der Volatilität von Ether beeinträchtigt werden.

In ganz besonders bevorzugter, ebenfalls als eigenständig und unabhängig von den vorstehend genannten Komponenten als erfinderisch angesehenen Ausgestaltung umfasst die digitale Handelsplattform ein Bewertungs- oder Scoring-Modul für den Nutzer, nachfolgend als "Paydentity" bezeichnet. Beim Paydentity Scoring werden aus den verfügbaren Daten der Investments eines Users möglichst zuverlässige Prognosen für zukünftige Anlagen erstellt. Analog werden Trendprognosen für unterschiedliche Investmentklassen ausgewiesen. Die so gesammelten Daten bilden dann ein Metascoring für zukünftige Investitionen des Users.

Paydentity-Prognosen sind Einschätzungen über mögliche, für den Nutzer besonders günstige oder zu ihm passende Investmentszenarien, und sie identifizieren neue Produkte und Märkte. Weiterhin dient das Paydentity-Scoring dazu, eine Bewertung vorhandener Werte eines Users zu berechnen, beispielsweise zum Zweck einer Sicherheitsleistung bei Beleihung seiner Wallet. Dabei werden alle Transaktionen eines Zeitraums als Berechnungsgrundlage herangezogen, um einen validen Score zu ermitteln. Mit anderen Worten: erfindungsgemäß werden sowohl die vorhandenen Substanzwerte eines Nutzers als auch dessen Transaktions- oder Verhaltensprofil während des betrachteten Zeitraums für die Berechnung eines Scorings, Ratings oder eines Bonitätswerts berücksichtigt. Darauf basierend kann eine ermittelte Summe in der Art eines Darlehens, besichert durch die ermittelten vorhandenen Werte des Nutzers, als zusätzliches Anlagekapital auf die Wallet übertragen oder dem Nutzer zur freien Verfügung gestellt werden. Die erwirtschafteten Renditen des zugrundeliegenden Investments bleiben davon unberührt.

Das so genannte Margin, also das zur Verfügung gestellte zusätzliche Kapital, wird verzinst und muss vom Margin-Nehmer ratierlich der zugrundeliegenden Zinsberechnung rückgeführt werden. Bei ausbleibenden Zahlungen oder der Nichtzahlung eines Margin Calls wird das geblockte Kapital durch die digitale Handelsplattform ausgelöst und rückgeführt. Das für die Paydentity bereitgestellte Kapital steht den Usern der digitalen Handelsplattform somit als festverzinstes Anlageprodukt zur Verfügung.

Die Paydentity-Modul basiert somit unter anderem auf der Analyse der Anlagekontinuität von Usern. Diese kann auch regional oder territorial abhängig, beispielsweise abhängig von lokalen Gegebenheiten oder wirtschaftlichen Faktoren, länderabhängig erstellt werden. Besonders bevorzugt basiert es auf der Formel:

$$P(x) = \frac{K(n)}{n * HDI_{(x)}^{4} * 100}$$

Dabei bedeuten:

P = Paydentity - Score
x = Land, (Variante zu x: (x*y), bei mehreren relevanten Ländern)
n = Zeit in Monaten
HDI = Human Development Index
K = einbezahltes Kapital

Damit kann für jeden Anleger ein eigener Score errechnet werden, welcher genau das beleihbare Kapital zu einem bestimmten Zeitpunkt berechnet. Dieses bereits in die Wallet eingezahlte Kapital kann vom User wieder ausgezahlt oder als zusätzliches Investmentkapital verwendet werden, ohne dass hierbei seine Spareinlage angegriffen wird. Unabhängig von der Höhe des über die Paydentity ausgezahlten Kapitals bleibt die Höhe seines Investmentkapitals gleich und erwirtschaftet weiter Renditen.

Hat ein Nutzer beispielhaft 1000€ in seiner Wallet hinterlegt und möchte nun über die Paydentity 500€ wieder auszahlen, kann er dies jederzeit tun. Auf diese 500€ zahlt er einen kalkulatorischen Zinssatz, der jedoch nicht fällig wird, da seine angelegten 1000€ weiterhin Gewinne erwirtschaften.

Kann ein Nutzer sein beliehenes Kapital nicht wieder einzahlen, friert die digitale Handelsplattform den ausbezahlten Betrag des Nutzers auf seiner Wallet ein. Im obigen Beispiel kann der Nutzer nun immer noch die restlichen 500€ abzüglich der kalkulatorischen Zinsen von seiner Wallet transferieren oder abheben.

Besonders bevorzugt und ebenfalls als eigenständig erfinderisch angesehen ist dabei die Berücksichtigung des Human Development Index (HDI, Index der menschlichen Entwicklung, erstellt von den Vereinten Nationen). In weiterer vorteilhafter Ausgestaltung erfolgt diese Berücksichtigung, wie in der Formel angegeben, mit einer Glättung durch die vierte Potenz x^4. Dadurch hat die digitale Handelsplattform die Möglichkeit, Anleger weltweit nach einem gleichen und fairen System zu bewerten. So haben auch Menschen aus einkommensschwachen Ländern die Möglichkeit, unter gleichen Konditionen Geld anzulegen und zu sparen wie Menschen aus wirtschaftsstarken Ländern wie Norwegen, Deutschland oder der Schweiz.

Ein Ausführungsbeispiel der Erfindung wird anhand einer Zeichnung näher erläutert. Darin zeigen:

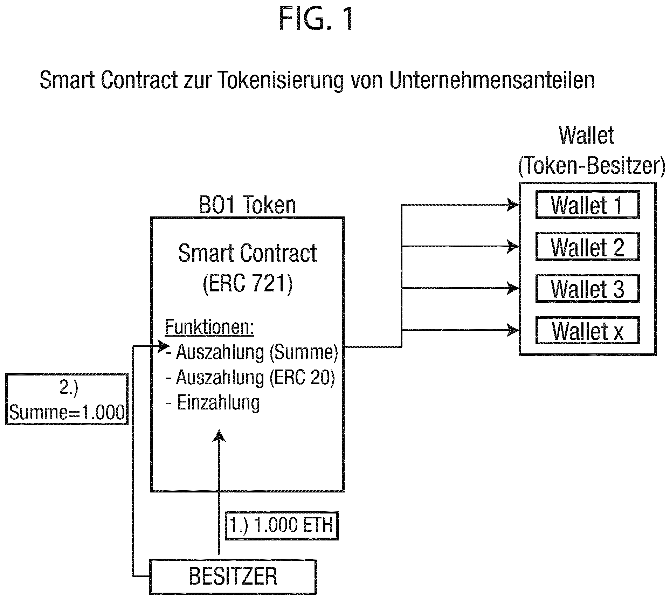

Fig. 1    schematisch die Struktur eines Smart Contracts zur Tokenisierung von Assets im Falle der Auszahlung von Dividenden oder Coupons in ETH,

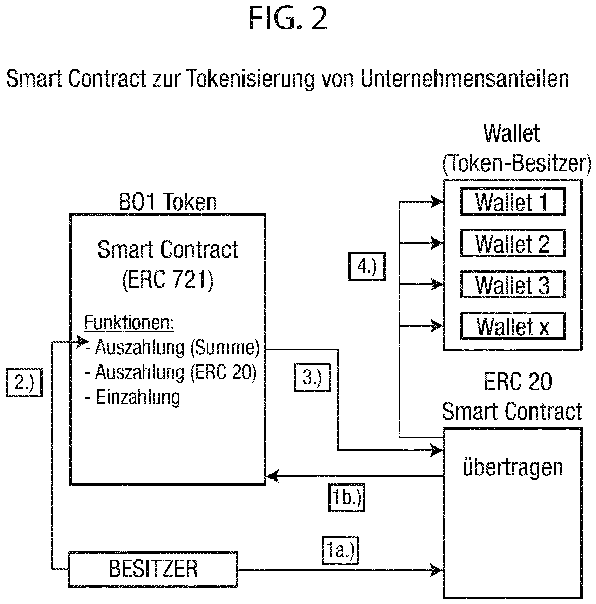

Fig. 2    schematisch die Struktur eines Smart Contracts zur Tokenisierung von Assets im Falle der Auszahlung von Dividenden oder Coupons inERC20 Token,

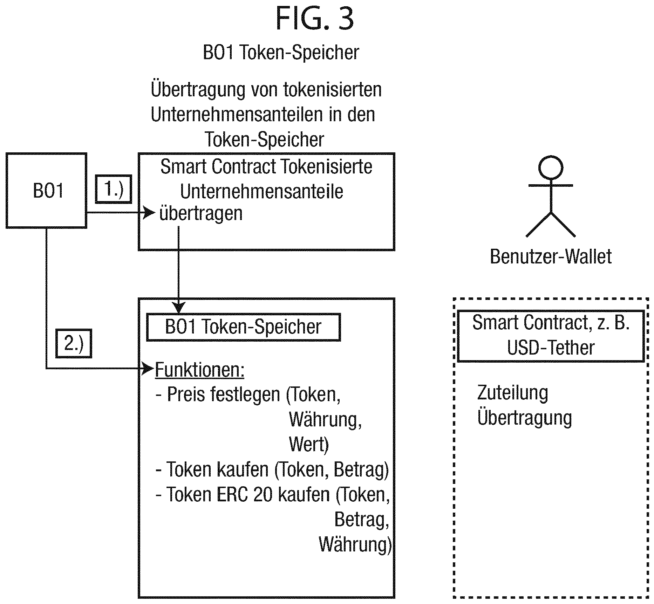

Fig. 3    schematisch die Struktur einer digitalen Handelsplattform mit einem Token Store Modul bei der Übertragung eines tokenisierten Assets in den Token Store,

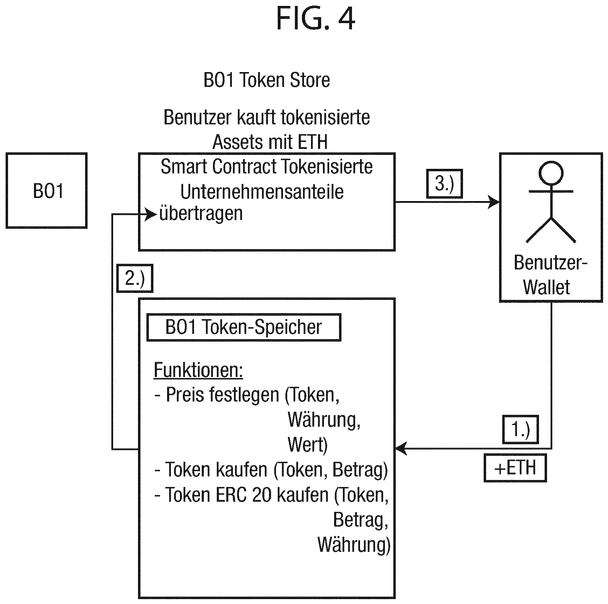

Fig. 4    schematisch die Struktur einer digitalen Handelsplattform mit einem Token Store Modul beim Erwerb von Security Tokens auf ETH-Basis, und

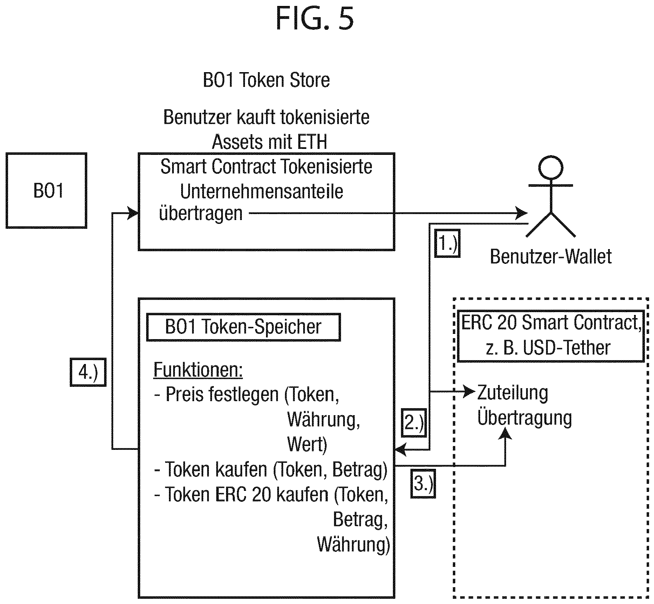

Fig. 5    schematisch die Struktur einer digitalen Handelsplattform mit einem Token Store Modul beim Erwerb von Security Tokens auf ECR20-Basis.

**Patentansprüche**

1.  Digitale Handelsplattform mit einem Token Store Modul, in dem für die Ausgabe und Veräußerung von Unternehmensanteilen, Unternehmensschuldverschreibungen oder dergleichen für das anbietende Unternehmen jeweils ein eigenständiger Smart Contract erstellt wird, über den die zur Veräußerung vorgesehenen Unternehmensanteile, Unternehmensschuldverschreibungen oder dergleichen tokenisiert werden.

2.  Digitale Handelsplattform nach Anspruch 1, deren Token Store Modul als Smart Contract ausgestaltet ist.

3.  Digitale Handelsplattform nach Anspruch 1 oder 2, die ein vom Nutzer unmittelbar aktivierbares Auto-Invest-Modul umfasst.

4.  Digitale Handelsplattform nach einem der Ansprüche 1 bis 3, die ein Scoring- oder Bonitätsmodul umfasst, das für den jeweiligen Nutzer einen Score- oder Bonitätswert ermittelt, der unter anderem auf dem bisherigen Investitions- und Anlageverhalten des jeweiligen Nutzers beruht.

# FIG. 1

Smart Contract zur Tokenisierung von Unternehmensanteilen

# FIG. 2

## Smart Contract zur Tokenisierung von Unternehmensanteilen

Wallet
(Token-Besitzer)

BO1 Token

Smart Contract
(ERC 721)

Funktionen:
- Auszahlung (Summe)
- Auszahlung (ERC 20)
- Einzahlung

Wallet 1
Wallet 2
Wallet 3
Wallet x

4.)

2.)

3.)

ERC 20
Smart Contract

übertragen

1b.)

1a.)

BESITZER

# FIG. 3

BO1 Token-Speicher

Übertragung von tokenisierten
Unternehmensanteilen in den
Token-Speicher

| BO1 | 1.) | Smart Contract Tokenisierte<br>Unternehmensanteile<br>übertragen |

BO1 Token-Speicher

2.)

Funktionen:
- Preis festlegen (Token,
                    Währung,
                    Wert)
- Token kaufen (Token, Betrag)
- Token ERC 20 kaufen (Token,
                        Betrag,
                        Währung)

Benutzer-Wallet

Smart Contract, z. B.
USD-Tether

Zuteilung
Übertragung

# FIG. 4

BO1 Token Store

Benutzer kauft tokenisierte
Assets mit ETH

| BO1 | Smart Contract Tokenisierte Unternehmensanteile übertragen | 3.) | Benutzer-Wallet |

2.)

BO1 Token-Speicher

Funktionen:
- Preis festlegen (Token,
                Währung,
                Wert)
- Token kaufen (Token, Betrag)
- Token ERC 20 kaufen (Token,
                Betrag,
                Währung)

1.)

+ETH

# FIG. 5

BO1 Token Store

Benutzer kauft tokenisierte
Assets mit ETH

BO1

Smart Contract Tokenisierte
Unternehmensanteile
übertragen ————————

1.)

Benutzer-Wallet

ERC 20 Smart Contract,
z. B. USD-Tether

BO1 Token-Speicher

4.)

Funktionen:
- Preis festlegen (Token,
Währung,
Wert)
- Token kaufen (Token, Betrag)
- Token ERC 20 kaufen (Token,
Betrag,
Währung)

2.)

Zuteilung
Übertragung

3.)

Europäisches
Patentamt

European
Patent Office

Office européen
des brevets

**EUROPÄISCHER RECHERCHENBERICHT**

Nummer der Anmeldung

**EP 21 18 5722**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Various: "Ethereum – Wikipedia", , 15. Oktober 2018 (2018-10-15), XP055758812, Gefunden im Internet: URL:https://en.wikipedia.org/w/index.php?title=Ethereum&oldid=864201678 [gefunden am 2020-12-10] * Seite 1 – Seite 7 * ----- | 1-4 | INV. G06Q20/06 G06Q40/06 |
| A | Roth Jakob ET AL: "The Tokenization of Assets: Using Blockchains for Equity Crowdfunding", SSRN Electronic Journal, 19. September 2019 (2019-09-19), Seiten 1-33, XP055870214, DOI: 10.2139/ssrn.3443382 Gefunden im Internet: URL:https://papers.ssrn.com/sol3/papers.cfm?abstract_id=3443382 [gefunden am 2021-12-07] * das ganze Dokument * ----- | 1-4 | |

RECHERCHIERTE
SACHGEBIETE (IPC)

G06Q

Der vorliegende Recherchenbericht wurde für alle Patentansprüche erstellt

| Recherchenort | Abschlußdatum der Recherche | Prüfer |
|---|---|---|
| Den Haag | 7. Dezember 2021 | Bohner, Michael |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes
  Dokument

EPO FORM 1503 03.82 (P04C03)